# EUROPEAN PATENT APPLICATION

(11) **EP 3 273 347 A1**
(43) Date of publication of application: **24.01.2018**
(21) Application number: 16305946.2
(22) Date of filing: 22.07.2016
(51) Int. Cl.: G06F 9/455, G06F 9/54, H04L 29/08

(54) **SYSTEM AND METHOD FOR STORAGE ACCESS INPUT/OUTPUT OPERATIONS IN A VIRTUALIZED ENVIRONMENT**

(71) Applicant: 6Wind, 78180 Montigny le Bretonneux (FR)
(72) Inventor: COLLET, Thibaut, 78000 VERSAILLES (FR)
(74) Representative: Cabinet Plasseraud

(57) **Abstract**

A method for managing a data input/output operation of a virtual node of a virtualized environment running on a host computer comprising a processor operatively coupled with a local memory, for memory write of data in a distant memory comprised in a data storage network node operatively coupled to the host computer through a communication network, is proposed. The method comprises: receiving a request of the virtual node for memory write of the data, the request comprising information related to at least one location in the local memory of the data; generating a first packet descriptor of a packet carrying a message according to a communication protocol between the host computer and the data storage network node, based on the request for memory write of the data, comprising a header of the message; generating at least one second packet descriptor of the packet based on the information related to the at least one location in the local memory of the data; and providing the first and second packet descriptors to a network interface of the host computer for transmission of the message to the data storage network node.

## Description

The present disclosure relates to the field of data storage in virtualized environments.

Such virtualized environments typically include virtual machines (also referred to as virtualization containers or guest environments) which are software emulations of a physical machine executing software through a software system usually referred to as a hypervisor, a hypervisor domain, a virtual machine manager, or a host environment. These software emulations may also use some on-CPU specific acceleration instructions.

Virtualization through hypervisors or Operating System containers allows decoupling of hardware and software to simplify applications deployment. This has led to the development of architectures in which hardware storage means are not hosted on the same physical machine as the one on which the virtualized environment is instantiated. Typically, a virtualized environment comprising a hypervisor domain and one or several virtualization containers running on a physical machine will communicate with a storage server running on a separate server disk physical machine using a specific communication protocol.

This portability benefit comes at the cost of performance degradation for Input/output (I/O) operations for storage access.

There is therefore a need for providing an improved system and method for storage access input/output operations in a virtualized environment.

It is an object of the present subject disclosure to provide an improved system and method for storage access input/output operations in a virtualized environment.

Another object of the present subject disclosure is to provide systems, software and methods for alleviating the drawbacks for storage access input/output operations of conventional virtualized environment systems.

To achieve these objects and other advantages and in accordance with the purpose of the present subject disclosure, as embodied and broadly described herein, in one aspect of the present subject disclosure, a method that uses a specific memory write task which directly provides location information for the data to be written in memory to a network interface of a host computer running a virtualized environment, is proposed.

The proposed method provides the benefit of decreasing the processing load at the host environment of the virtualized environment thereby reducing the processing latency of a memory write operation.

The present subject disclosure further provides a memory write request management method that avoids copying data stored in local memory of the host environment and to be written in distant memory by providing to a network interface a pointer to the data stored in local memory of the host environment instead of the data itself.

In an aspect of the present subject disclosure, a method for managing a data input/output operation of a virtual node of a virtualized environment running on a host computer comprising a processor operatively coupled with a local memory, for memory write of data in a distant memory comprised in a data storage network node operatively coupled to the host computer through a communication network, is proposed. The method comprises: receiving a request of the virtual node for memory write of the data, the request comprising information related to at least one location of the data in the local memory; generating a first packet descriptor of a packet carrying a message according to a communication protocol between the host computer and the data storage network node, based on the request for memory write of the data, the first packet descriptor comprising a header of the message; generating at least one second packet descriptor of the packet based on the information related to the at least one location in the local memory of the data; and providing the first and second packet descriptors to a network interface card of the host computer message.

In some embodiments, the generating at least one second packet descriptor may comprise the generating a plurality of second packet descriptors, based on information related to respective locations of the data in the local memory. The generating a plurality of second packet descriptors may indeed be advantageously used in situations where the data is stored at different locations in the local memory.

The proposed methods may advantageously be used in a virtualized environment which comprises a guest environment and a host environment operatively coupled through a virtual interface, in a case where the request for memory write of the data is received by the host environment from the guest environment.

In some embodiments, the generating the at least one second packet descriptor may be based on first address information of the data in the local memory comprised in the request. In such case, the generating the at least one second packet descriptor may comprise translating address information comprised in the request into second address information of the data in local memory.

In some embodiments, the at least one second packet descriptor may comprise a pointer to the data stored in the local memory.

In some embodiments, the first packet descriptor may comprise identification information of the distant memory, and information indicating that the data input/output operation is for memory write.

In some embodiments, the first packet descriptor may further comprise a network layer protocol header, a transport layer protocol header, and a physical layer protocol header. For example, the first packet descriptor may further comprise an Internet Protocol, IP, header, as a network layer protocol header, and a Transport Control Protocol, TCP, or a Uniform Datagram Protocol, UDP, header, as a transport layer protocol header.

According to another aspect, the present subject disclosure provides a system for managing a data input/output operation of a virtual node, which comprises a computer comprising a processor operatively coupled with a local memory and a network interface, configured to run a virtualized environment comprising the virtual node, and to run in the virtualized environment a software task configured to: receive a request of the virtual node for memory write of data stored in the local memory in a distant memory of a data storage network node operatively coupled with the computer through the network interface, the request comprising information related to at least one location of the data in the local memory; generate a first packet descriptor of a packet carrying a message according to a communication protocol between the host computer and the data storage network node, based on the request for memory write of the data, the first packet descriptor comprising a header of the message; generate at least one second packet descriptor of the packet based on the information related to the at least one location in the local memory of the data; and provide the first and second packet descriptors to the network interface for transmission of the message to the data storage network node.

According to one or more additional aspects, disclosed is a computer program product comprising computer program code tangibly embodied in a computer readable medium, said computer program code comprising instructions to, when provided to a computer system and executed, cause said computer to perform a method for managing a data input/output operation according to the present subject disclosure.

According to yet other aspects, disclosed is a set of data representing, through compression or encoding, a computer program according to the present subject disclosure.

According to yet other aspects, disclosed is a non-transitory computer-readable storage medium storing a computer program that, when executed, causes a system comprising a processor operatively coupled with a memory, to perform a method for method for managing a data input/output operation of a virtual node of a virtualized environment running on a host computer comprising a processor operatively coupled with a local memory, for memory write of data in a distant memory comprised in a data storage network node operatively coupled to the host computer through a communication network, the method comprising: receiving a request of the virtual node for memory write of the data, the request comprising information related to at least one location in the local memory of the data; generating a first packet descriptor of a packet carrying a message according to a communication protocol between the host computer and the data storage network node, based on the request for memory write of the data, the first packet descriptor comprising a header of the message; generating at least one second packet descriptor of the packet based on the information related to the at least one location in the local memory of the data; and providing the first and second packet descriptors to a network interface of the host computer for transmission of the message to the data storage network node.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

### Brief description of the drawings

The present subject disclosure will be better understood and its numerous objects and advantages will become more apparent to those skilled in the art by reference to the following drawings, in conjunction with the accompanying specification, in which:
Figures 1 and 2 are schematic diagrams illustrating host computing systems running a virtual environment in accordance with one or more embodiments.
Figure 3a is a schematic diagram illustrating an example of memory space organization in a storage medium of a storage server in accordance with one or more embodiments.
Figure 3b illustrates a SCSI Data-Out PDU for write operations of the iSCSI protocol which may be used in one or more embodiments.
Figure 4 is a flow-chart illustrating an exemplary process of managing a data I/O operation in accordance with one or more embodiments.
Figure 5a is a flow chart illustrating an exemplary process for generating a packet for transmission by a network interface of a host computer in accordance with one or more embodiments.
Figure 5b illustrates a packet for transmission by a network interface of a host computer in accordance with one or more embodiments.
Figure 6 shows a computer system in accordance with one or more embodiments.

### Description of embodiments

The advantages, and other features of the components disclosed herein, will become more readily apparent to those having ordinary skill in the art form. The following detailed description of certain preferred embodiments, taken in conjunction with the drawings, sets forth representative embodiments of the subject technology, wherein like reference numerals identify similar structural elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer. Examples of computer storage media include, but are not limited to, a flash drive or other flash memory devices (e.g. memory keys, memory sticks, key drive), CD-ROM or other optical storage, DVD, magnetic disk storage or other magnetic storage devices, memory chip, RAM, ROM, EEPROM, smart cards, Solid State Drive (SSD) devices or Hard Disk Drive (HDD) devices, or any other suitable medium from that can be used to carry or store program code in the form of instructions or data structures which can be read by a computer processor. Also, various forms of computer-readable media may transmit or carry instructions to a computer, including a router, gateway, server, or other transmission device, wired (coaxial cable, fiber, twisted pair, DSL cable) or wireless (infrared, radio, cellular, microwave). The instructions may comprise code from any computer-programming language, including, but not limited to, assembly, C, C++, Visual Basic, HTML, PHP, Java, Javascript, Python, and bash scripting.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs.

In the following description and claims, the terms "coupled" and "connected", along with their derivatives, may be used. In particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still co-operate or interact with each other.

As used herein, the term packet may include a unit of data that may be routed or transmitted between nodes or stations or across a network. As used herein, the term packet may include frames, protocol data units or other units of data. A packet may include a group of bits, which may include one or more address fields, control fields and data, for example. A data block may be any unit of data or information bits.

In the present disclosure, the terms "host" and "host environment" will be indifferently used to refer to an environment part of the virtualized environment which drives the hardware of the platform on which the virtualized environment is executed. In particular, the term "host" will be used indifferently to designate a hypervisor in the case of a virtualized environment that includes a hypervisor, or an operating system that has container support in the case of a container-based virtualization.

In the present disclosure, the terms "guest" and "guest environment" will be indifferently used to refer to an environment part of the virtualized environment in which applications can run. In particular, the term "guest" will be used indifferently to designate a virtual machine in the case of a virtualized environment that includes a hypervisor, or a container in the case of a container-based virtualization.

The fast path environment or any equivalent is used as an example of a set of data-plane primitives that can be either implemented in hardware (FPGA, ASICs) or software. The words data-plane and fast path can be used to describe the same technology as long as they describe technology that offloads packet processing from networking stacks provided with an operating system (which may be referred as a "slow path"). The Intel® DPDK environment or any equivalent is used as an example of set of libraries providing primitives for building packet processing environments. It can be based on source code from dpdk.org, any derivative or original software implementation of a packet processing environment. For example, ODP (Open Data Plane) is another alternative mainly focused on ARM families of processors.

It should be understood that embodiments of the present subject disclosure may be used in a variety of applications. Although the present invention is not limited in this respect, the method for data I/O operation management disclosed herein may be used in many apparatuses such as in any virtual node of a host computer implementing a virtualized environment, such as, for example, a virtual machine or a virtualization container. For clarity, the following description focuses on guest environments in virtualized environments. However, technical features of the present invention are not limited thereto.

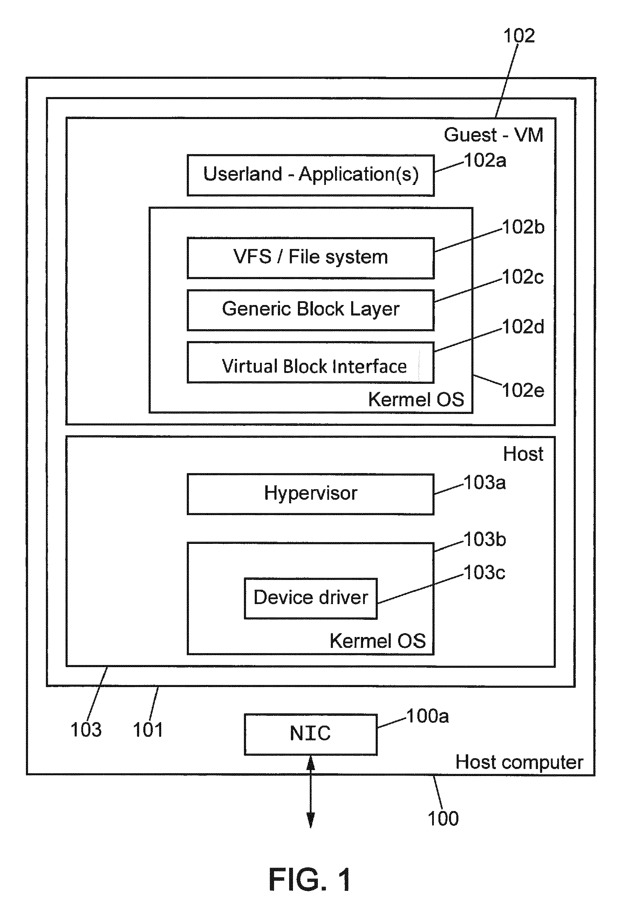

Figure 1 shows a host computer (100) running a virtualized environment (101) comprising a host environment (103) and a guest environment (102). The guest environment may correspond to virtual machine VM (102), which may be instantiated by a hypervisor (103a), a software running on the host (103). The architecture of the hypervisor (103a) may comprise a userland side (102a), that is, virtual machine side in which virtual machines of the virtualized environment are instantiated, and a kernel side (101) in which other software processes of the virtualized environment are instantiated.

The guest environment (102) may communicate with the host environment (103) through virtual interfaces, such as virtual memory block read/write interfaces and/or virtual network interfaces. Each of the virtual interfaces is associated with a virtual node of the virtualized environment, and emulates an interface for data communication or for memory read/write between the virtual node to which it is associated and another interface, which may be virtualized, para-virtualized, or non-virtualized, associated with a node, which may be the same or another virtual node, or a non-virtual node, internal or external to the virtualized environment and/or the host computer (100).

Shown on Fig. 1 is a memory read/write virtual interface (102d) (on the figure "Virtual Block Interface"), such as Virtio Blk or Virtio Scsi, implemented in the guest environment (102) for communicating memory read/write requests to the host environment (103).

The virtual machine VM (102) may also be provided with an operating system software (OSS) (102e), such as Linux, Windows, Solaris, Android, etc., which may provide typical OS functions for operating a computer (such as memory management, task management, CPU load management, etc.), for example through a kernel OS software (herein referred as an "OS kernel" or a "kernel"), and filesystem (such as virtual file system (VFS)) (102b) and Generic Block Device Layer (such as Generic Block Layer) (102c) functions with an memory read/write interface driver (102d), such as a virtual I/O driver of the VirtIO type.

The virtual machine VM (102) may also be provided with one or several applications (102a) whose instantiation is managed by the operating system software (OSS) (102e).

The host environment may also be provided with a kernel OS (103b), through which device drivers ((103c) may be instantiated. For example, network device drivers may be instantiated for remote memory access, and block device drivers may be instantiated for local memory access. In particular, a network device driver may be instantiated for remote memory access through a network interface (100a), provided on the host computer, in the form of a network interface card (NIC) (100a) and its associated network communication software.

It will be appreciated by those having ordinary skill in the relevant art that any suitable virtualized environment architecture may be used in place of the architecture and components thereof of the virtualized environment 101 on the host computer 100 which is given by way of example only.

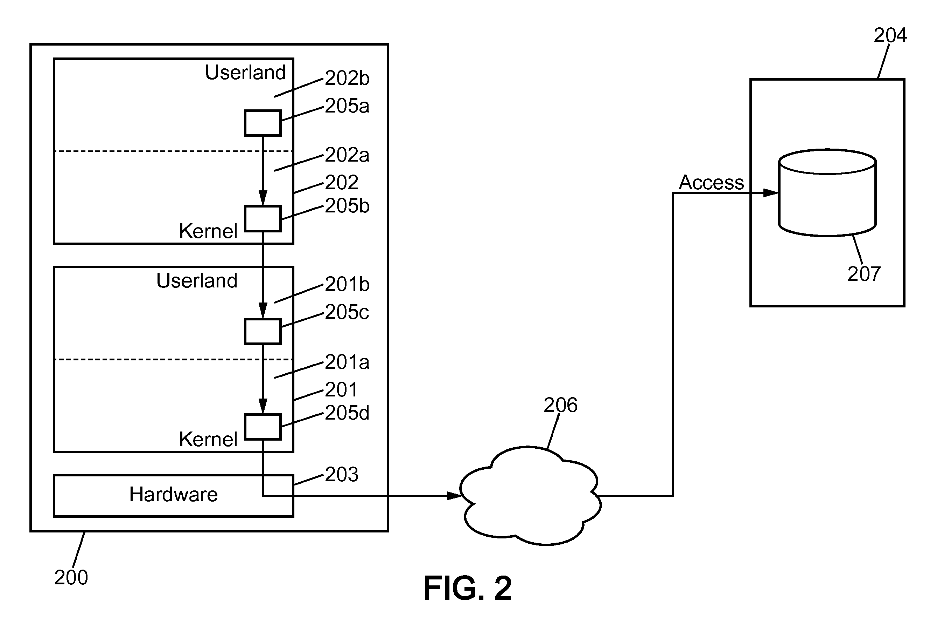

Figure 2 shows a host computer (200) running a virtualized environment comprising a host environment (201) and a guest environment (202). As discussed above, the host environment (201) may be software that drives the hardware (203) of the host computer (200), which, depending on the type of virtualization used in the embodiment, may be a hypervisor or an operating system that has container support. The guest environment (202) may provide the environment in which applications run, and, depending on the type of virtualization used in the embodiment, may be a virtual machine in the case of a hypervisor, or a container in the case of a container-based virtualization. The architectures of the host environment (201) and the guest environment (202) may each comprise a kernel (201 a, 202a), and a userland (201 b, 202b).

The host environment (201) may be operatively connected to a distant data storage (207) in a data storage network node, such as a storage server (204) through the hardware (203) of the host computer (200) and, in some embodiments, a network (206), and may be configured so as to communicate with the storage server (204) for I/O operations using a communication protocol. In such embodiments, the hardware (203) may include a network interface card and its associated software for network communication through the network (206).

It will be appreciated by those having ordinary skill in the relevant art that any suitable connection technology, including any network technology, such as, for example, an IP network, may be used in place of the network (206) which is given by way of example only.

In some embodiments, the host (201) may implement a hardware emulator module (not shown on Fig. 2), typically implemented in the form of software, such as the QEMU emulator, to emulate a processor and associated hardware peripherals, in order to create in software virtual peripherals, such as a virtual storage disk, used by the guest environment (202). Such a emulator module may be implement as part of the host kernel 201 a and/or as part of the host userland 201b, and be used to create virtual I/O interfaces managed by respective guest environments (202).

In this manner, a guest environment (202) may issue I/O operation requests to an emulated peripheral, through such a virtual I/O interface, and the I/O operation requests may be received and processed at the host (201) level by the emulator software, which is itself ran by the host (201).

Depending on the virtual environment architecture, I/O operation requests issued by a guest environment may be of at least two types. For example, I/O operation requests may be of a storage disk access type for access to a storage disk, or may be of a network type for network communications.

Upon receiving an I/O operation request of the storage disk access type, the emulator module may read a virtual storage disk / physical storage disk mapping, and identify the physical storage disk to which an access request should be sent. It may be configured to then create an access request to the identified physical storage disk.

This process is described hereinafter in further details, with reference to Fig. 2. The userland (202b) of the guest environment (202) may issue a storage disk access request (205a) (read or write operation) to the kernel (202a) of the guest environment (202). The processing of this storage disk access request (205a) in the kernel (202a) involves creating a virtual I/O operation request of the storage disk access type (205b) (hereinafter referred to as a "virtual I/O block request") to a virtual storage disk. As the kernel (202a) does not have information regarding the physical storage disk server (204), and instead have been configured with the virtual storage disk, the virtual I/O operation request is viewed by the kernel (202a) as a local storage disk access operation.

As discussed above, the userland (201 b) of the host environment (201) may implement a hardware emulator module, such as the QEMU emulator, for emulating a hardware storage disk, which will receive and process the virtual I/O block request (205b). The hardware emulator module may be configured to determine, for example by looking-up in a virtual storage disk / physical storage disk mapping table, a physical storage disk in the physical storage disk server (204) to which an access request corresponding to the received virtual I/O block request (205b) should be sent. Further to determining the physical storage disk, the userland (201 b) of the host environment (201) generates a physical I/O block request (205c), that is, a storage disk access request to be sent to the physical storage disk determined above.

The physical I/O block request (205c) may be transmitted to the kernel (201 a) of the host environment (201), where it may be processed to transmit a request (205d) to the storage server (204) through the hardware (203) of the host computer (200).

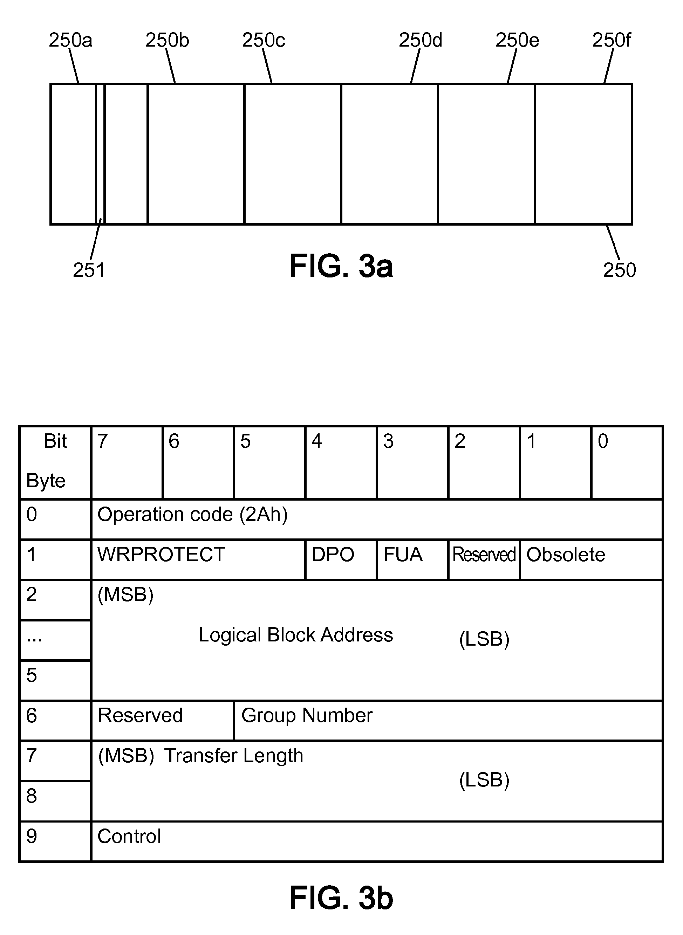

Fig. 3 shows an example of memory space organization in a storage medium (typically a disk) of a storage server (such as the storage server (204) illustrated on Fig. 2).

The memory space may be structured in memory blocks of 1 Mbytes, each consisting of 1000 blocks of 1 Kbytes. Other typical sizes of blocks include 512 bytes, 4 Kbytes, and 8 Kbytes. Various organization of an address space for addressing the memory space may be adopted. For example, a hierarchical address space may be used for defining addresses in the memory space.

Fig. 3a shows a memory space (250) which may correspond to a storage disk, composed of 6 memory blocks (250a-250f) each having a 512 Kbytes storage capacity.

Referring back to Fig. 2, when an application running in the userland (202b) of the guest environment (202) requests to write N = 42 bytes of data at address *Mem_Addr =* 200 in the memory space (250), a memory write request may be generated to the kernel (202a) of the guest environment.

The processing of such request at the kernel (202b) of the guest environment (202) may include a determination of the memory block corresponding to the *Mem*_*Addr* in which the *N* bytes of data are to be written, and a reading and copying of the content of the determined memory block in local memory (e.g. in RAM memory) of the guest environment (202).

The N bytes of data (251) may then be written in the local copy of the memory block (250a) in local memory of the guest environment (202), and the updated memory block (250a) may then be written back into the memory space (250).

The above-described process of handling a storage disk access request generated at the guest environment (202) of a virtualized environment running on a host computer (200) may involve several memory copy operations, in particular between containment barriers, such as between the kernel and the userland in the host environment and/or in the guest environment, which degrades the performance in terms of latency of virtualized environments for storage access I/O operations.

In particular, disk access performances of hardware emulator modules such as QEMU have been identified as a significant cause of performance degradation in terms of latency for storage access I/O operations in virtualized environments.

This high latency for storage access I/O operations in virtualized environments becomes an even more salient problem in virtualized environments implementing a guest environment configured to wait for an acknowledgment at the physical layer level of completion of a storage access I/O operation. In the case where the requested storage access I/O operation is a memory write of data, the guest environment may be configured to write the data in local memory, as explained above, at the userland and/or the kernel level, and to wait until receipt of the acknowledgment of completion of the memory write operation for the data before releasing the local memory space used for the memory write operation, or using such local memory space for another purpose. For example, the userland and the kernel of the guest environment may be configured to reserve local memory buffers in which data to be written in disk storage are stored until completion of the disk storage writing operation is acknowledged.

As local memory space, which can for example be limited to RAM memory of the host computer in which the virtualized environment is running, is sparse, it is desirable to decrease the amount of time during which such space is used for a storage access I/O operation for memory write in a memory space different from the local memory space (e.g. a memory space in a remote data storage network node).

The present subject disclosure proposes a scheme that improves the performance of virtualized environments for storage access I/O operations by handling memory access requests generated by a guest environment (virtual I/O block requests) through a processing module other than a hardware emulator module so that such requests are transmitted to a remote memory space without being copied in local memory of the userland of the host environment and without transiting through the kernel of the host environment.

In embodiments of the proposed scheme, a virtual I/O block request for a memory write generated by a guest environment is processed by an I/O back-end module which transmits the processed request directly to a network interface of the host computer for transmission to the remote memory space.

In an embodiment, a software task is generated in the host environment, for example by a back-end I/O processing module implemented in the userland of the host environment. In the following, this software task will be referred to as a Memory Write Zero-Copy task. The creation of a Memory Write Zero-Copy task may be triggered upon reception of a virtual I/O block request, that is, a virtual I/O operation request for storage disk access, from a guest environment of the virtualized environment running on the host computer.

In some embodiments, the Memory Write Zero-Copy task may be configured to transcode the received virtual I/O block request message into a message of the application-level storage protocol used between the host computer and the data storage network node.

The application-level storage protocol message may include information regarding the location in guest environment local memory of the data to be written in storage memory of the data storage network node. Such information may for example be included in the payload of the application-level storage protocol message in embodiments in which storage protocol messages include a header and a payload.

The application-level storage protocol may in some embodiments be of the Internet Small Computer System Interface (iSCSI) Protocol type. The ISCSI protocol is specified in the Request For Comments RFC No. 7143, entitled "Internet Small Computer System Interface (iSCSI) Protocol", edited by the Internet Engineering Task Force (IETF). According to the ISCSI protocol, an ISCSI data write operation is initiated by a message of the "SCSI Command" Packet Data Unit (PDU) type that includes a SCSI "Command Descriptor Block" (CDB) of the SCSI Write command type.

Several SCSI Write commands are defined in the SCSI specifications, and a detailed description thereof can for example be found in the document "Working Draft American National Standard, Project T10/BSR INCITS 506, Information technology - SCSI Block Commands - 4 (SBC-4), Revision 9". For example, the "WRITE (10)" command described in paragraph 5.35 of this document has a format shown in Fig. 3b. Referring to Fig. 3b, the "Logical Block Address" field is filled with an address where the data are to be written, for instance the first memory block where data will be written. The "Transfer Length" field indicates the number of bytes that are to be written.

The SCSI Command PDU described in Section 11.3 of the RFC 7143 (version dated April 2014) includes a "DataSegment" field, which can be used to include data to be written in memory for a SCSI Command PDU that includes a WRITE(10) SCSI command. When all data to be written in distant memory cannot be included in the DataSegment of the SCSI Command PDU carrying the Write SCSI command, the distant memory server node can send a Ready To Transfer (R2T) message to the data source, which will respond with one or several "SCSI Data-Out" PDUs that include the remaining of the data to be written in memory. A detailed example of a write operation for the ISCSI protocol is given in Annex A.2 of the RFC 7143.

In some embodiments, the application-level storage protocol message may be provided directly to the network interface card (NIC) of the host computer for transmission to the data storage network node using a network stack implemented on the NIC.

Therefore, in contrast with conventional systems in which the virtual I/O block request message would be processed by the host environment using virtual interfaces for communication between the host environment and the guest environment and within the host environment, a storage protocol message is built upon receipt of a virtual I/O block request, and provided directly to a hardware network interface for transmission to the data storage network node without further processing (including data copying) at the host environment level.

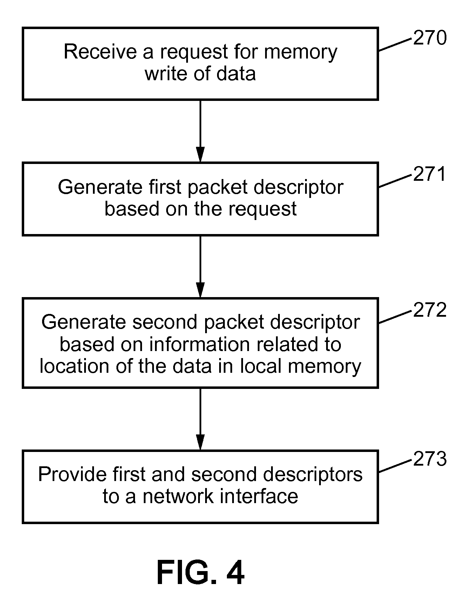

Fig. 4 shows a method of managing a data I/O operation according to embodiments of the present subject disclosure.

A virtual I/O block request message, that is, a request for memory write of data in a distant memory of a remote data storage network node, which may have been generated at any virtual node of a virtualized environment, is received (270) in the virtualized environment. The request may comprise information related to a location of the data in a local memory of a host computer running the virtualized environment.

Depending on the embodiments, the request may have been generated at various virtual nodes of the virtualized environment, such as, for example, at a userland or at a kernel of a guest environment (e.g. a virtual machine), and may also be received at different virtual nodes of the virtualized environment, such as, for example, at a userland or at a kernel of a host environment (e.g. a hypervisor).

A first packet descriptor of a packet carrying a message according to a communication protocol between the host computer running the virtualized environment and the remote data storage network node is generated (271) based on the request for memory write of the data.

A second packet descriptor of the packet comprising a header of the message may be generated (272), based on the information related to a location of the data in the local memory of the host computer running the virtualized environment comprised in the request.

In some embodiments, the request for memory write of data may comprise address information of the data in the local memory. In such case, it may be chosen in some embodiments to include in the second packet descriptor the physical address of the data in local memory. The address information comprised in the request, considered as logical address of the data, may then be translated into such physical address of the data in local memory before incorporation into the second packet descriptor.

In some embodiments, a plurality of second packet descriptors may be generated, for instance in a case where the data to be written in distant memory is stored in a plurality of locations in local memory. This advantageously avoids moving data in local memory in order to build a contiguous block of data in local memory for memory write in distant memory.

Once generated, the first and second packet descriptor may be provided (273) directly to a network interface of the host computer running the virtualized environment for generation of the message described by the first and second descriptor, and transmission of the message to the remote data storage network node.

Depending on the architecture and hardware modules of the host computer running the virtualized environment, the network interface may be of various types, such as, for example, a network interface card or chipset. In addition, depending on the embodiments, the network interface may implement various network communication protocol stacks (and in particular, different transport layer protocol, network layer protocol, physical layer protocol) respectively corresponding to communication protocols used in networks to which the host computer is connected.

For example, the host computer may be operatively coupled with the data storage network node through a TCP/IP or UDP/IP network, and may be connected to such network using an Ethernet physical-layer interface.

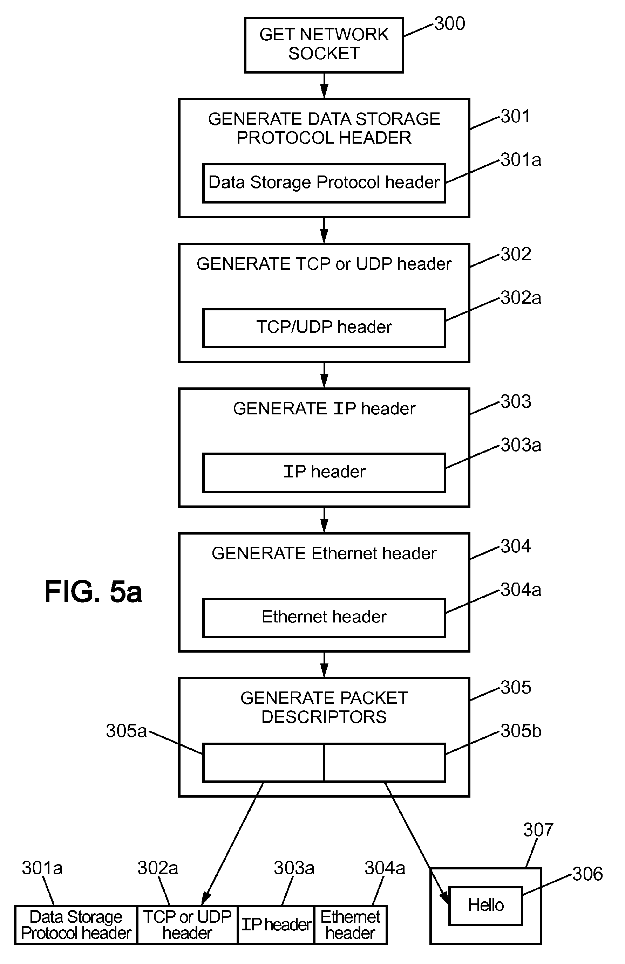

Fig. 5a illustrates the generation of a packet for transmission by a network card of the host computer according to the present subject disclosure.

Fig. 5a shows a data set (306) comprising 5 ASCII characters forming the word "HELLO". Assuming each ASCII character is coded on one byte, the data set illustrated on Fig. 5a would comprise 5 bytes.

As explained above, the kernel and/or the userland of the guest environment may have copied in a local memory (307) the 5 bytes of data (306) to be written in distant memory prior to issuing the virtual I/O block request to the host environment.

In some embodiments, the Memory Write Zero-Copy task may request (300) a network socket identifier of the network interface through which data is to be transmitted to the distant memory. The network socket may be implemented in software to identify and manage an I/O (hardware) interface on a network interface card, and configure and request data communication over the I/O interface. In embodiments where data communication between the host computer and the data storage network node is based on the IP protocol, the socket will be an IP socket through which IP packets are transmitted, and possibly received.

A data storage protocol message may be generated with the generation (301) of a data storage protocol header (301 a).

Depending on the transport layer protocol used for exchanging data storage protocol messages, a transport layer header may be generated for the data storage protocol message for memory write of the data to be written in distant memory. In the case of using the IP protocol as illustrated on Fig. 5a, the transmission of IP packets to the data storage network node may use the Transport Control Protocol (TCP) or the User Datagram Protocol (UDP), in which case a TCP or UDP header (302a) is generated (302) for the data storage protocol message for memory write of the data to be written in distant memory based on parameters chosen for the transmission of the message (including, typically, parameters related to the source and destination of the message to be transmitted (such as information identifying such source and destination, e.g. address information)).

Depending on the network layer protocol used for exchanging data storage protocol messages, a network layer header may be generated for the data storage protocol message for memory write of the data to be written in distant memory based on network layer parameters of the host computer and of the distant node to which the data storage protocol message is to be transmitted. In the case of using the IP protocol as illustrated on Fig. 5a, an IP header (303a) is generated (303) and may be appended to the TCP or UDP header (302a) to form a TCP/IP or UDP/IP header.

Depending on the network access layer protocol used for accessing the communication network through which data storage protocol messages are exchanged, a network access layer header may be generated for the IP packet carrying the data storage protocol message for memory write of the data to be written in distant memory. In the case of using the IP protocol as illustrated on Fig. 5a, the network interface card may use an Ethernet port as physical I/O interface, and an Ethernet header (304a) is generated (304) and may be appended to the TCP/IP or UDP/IP header.

The packet carrying the data storage protocol message for memory write of the data to be written in distant memory (herein referred to as the "memory write packet") may be represented by two packet descriptors (305a - 305b), with a first descriptor (305a) which may in some embodiments point to a header section of the memory write packet, while a second descriptor (305b) may point to a payload section of the memory write packet, that is, the data to be written in distant memory.

In the case illustrated on Fig. 5a, the first descriptor (305a) may point to a set of headers comprising the data storage protocol header (301 a), the TCP/UDP header (302a), the IP header (303a), and the Ethernet header (304a). The second descriptor (305b) may point to the data (306) stored in the guest environment local memory (307) which are to be written in the distant memory.

In some embodiments, the second descriptor (305b) may be generated using information regarding the location in guest environment local memory of the data to be written in storage memory of the data storage network node retrieved from the virtual I/O block request received from the host environment.

In some embodiments, such information may indicate a memory address of the data stored in guest environment local memory, in which case the second descriptor (305b) may comprise a pointer to this memory address or, in the case where this memory address is a logical address (as seen by the virtual node originating the virtual I/O block request), to a physical memory address obtained by translation of the logical address.

The present subject disclosure may therefore in some embodiments advantageously leverage the capability found in most network interface cards of transmitting over a network packets received in several fragments or sections which are respectively described by packet descriptors.

In some embodiments, a packet provided to the network interface card of the host computer comprises two separate fragments. A first fragment includes headers for transmission of the packet according to the communication protocols of the different layers used for transmission of the packet, and a header of the application-layer storage protocol message generated based on the virtual I/O block request received from the guest environment.

A second fragment includes a pointer to the data to be transmitted for memory write in the distant memory, for example as the application-layer storage protocol message payload.

These two fragments may advantageously be indirectly provided to the network interface card through descriptors, which avoids the need to performing additional copies in local memory of the data to be written in distant memory.

As the data to be written in distant memory is stored in local memory (e.g. by the guest environment), the present subject disclosure provides a memory write request management method that avoids copying the data to be written in distant memory in local memory of the host environment by providing to a network interface a pointer to the data stored in local memory of the host environment instead of the data itself.

Therefore, in some embodiments, the present subject disclosure provides a scheme that decreases the amount of processing at a host environment level of a memory write request generated at a guest environment, thereby shortening the latency associated with processing of the request, but also avoids extra copying of the data to be written in memory at the host environment level, thereby improving local memory usage for the host computer of the virtualized environment.

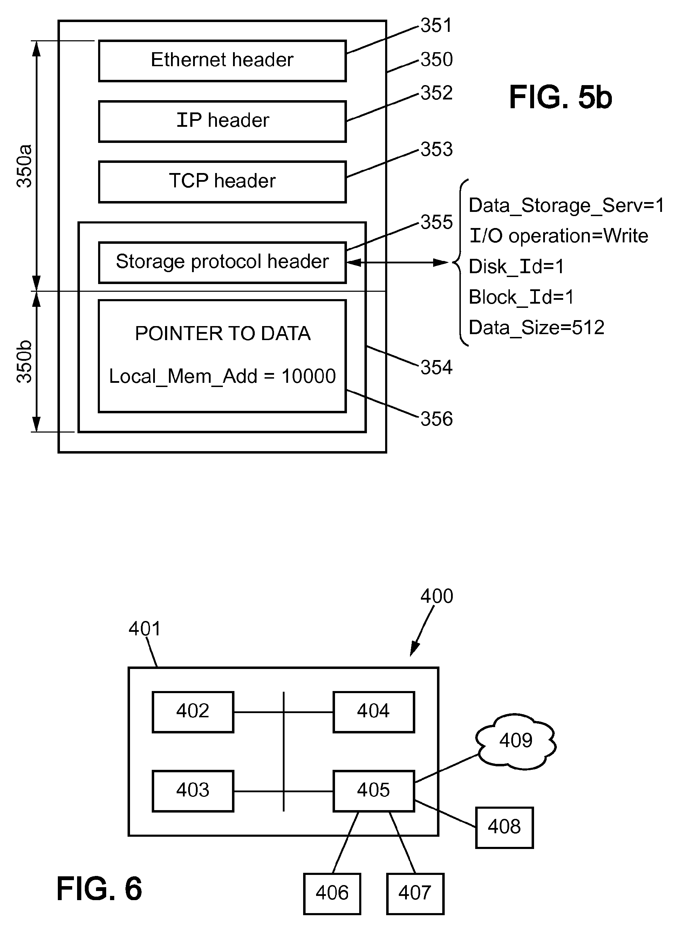

Fig. 5b illustrates a packet provided to a network card of the host computer according to embodiments of the present subject disclosure, in the exemplary case where data to be written in distant memory comprises *Data*_*Size* = 512 bytes stored at local memory address *Local_Mem_Addr* = 10000 of the host environment, and where such data is to be written in memory block *Mem_Block* = 1 of the distant memory hosted by data storage server *Data*_*Storage*_*Server =* 1.

In such case a storage application layer protocol message may be generated and passed to a transport layer with a request to transmit the message to the data storage server *Data*_*Storage*_*Server =* 1.

Fig. 5b shows a packet (350) comprising two packet segments (350a, 350b). The first packet segment (350a) includes an Ethernet header (351), an IP header (352), a TCP header (353), and a storage protocol header (355). The storage protocol header (355) is the header of an application-layer storage protocol message (354) generated at the host environment level, based on a virtual I/O block request received from the guest environment.

In the example illustrated on Fig. 5b, the storage protocol header includes a data storage server identifier *Data*_*Storage*_*Server* that identifies the data storage server, that is, the data storage network node in the memory of which the data are to be written.

The storage protocol header may also include information indicating that the type of I/O operation requested is a memory write (in the example illustrated on Fig. 5b, *I*/*O Operation =* Write ), information identifying a data storage disk on which the data are to be written in distant memory (in the example illustrated on Fig. 5b, *Disk_Id =* 1), information identifying a memory block in which the data are to be written in distant memory (in the example illustrated on Fig. 5b, *Block_Id =* 1), and a size of the data to be written in distant memory (in the example illustrated on Fig. 5b, *Data*_*Size* = 512).

The person skilled in the art will understand that the storage protocol header is just an example and that other storage protocol message configurations could be used depending on the application storage protocol used for communication between the host computer and the data storage network node.

The second packet segment (350b) includes information indicating the data to be written in distant memory, which can be in the form of a pointer (356) to the data to be written in distant memory. In some embodiments such information can include address information of the memory space in local memory where the data to be written in distant memory has been stored by the host environment. In the illustrated example, such information can include the local memory address *Local_Mem_Addr* = 10000 of the data in the local memory of the host environment.

The network card can then be provided in some embodiments with two packet descriptors, the first packet descriptor pointing to the first packet segment (350a) with possibly an indication that the first packet segment (350a) corresponds to the header part of the packet, and the second packet descriptor pointing to the second packet segment (350b), with possibly an indication that the second packet segment (350b) corresponds to the payload part of the packet.

Embodiments of the proposed data I/O operation management method may be implemented, in full or in part, on virtually any type of computer regardless of the platform being used. For example, as shown on Fig. 6, a computer system (400), which may correspond to the host computers (100) (200) shown on Figs. 1 and 2, includes a processing unit (401), which includes one or several processors (402), such as a central processing unit (CPU) or any other hardware processor, associated (local) memory (403) (for example, a RAM memory, a cache memory, a flash memory, etc.), a storing unit (404) (for example a hard drive, an optical disk such as a CD or a DVD, a flash memory key, etc.), and numerous other elements and functionalities typical of today's computers (not shown on the figure).

The processing unit (401) may also comprise an input/output interface unit (405) for driving interfaces (including network interfaces) between the processing unit (401) and input/output means of the system (400) and/or a network to which the system (400) may be connected. The system (400) may include input means, such as a keyboard (406), a mouse (407), or a microphone (not shown). In addition, the system (500) may also include output means, such as a monitor (408) (for example, a LCD monitor, a LED display, or a CRT display, etc.). The computer system (400) may also be connected to a network (409) (for example, a local area network (LAN), a Wide Area Network (WAN) such as the Internet, or any other similar type of network) through the input/output interface unit (405), via a network interface connection (not shown). In such case, the input/output interface unit (405) may include a network interface, such as, for example, a network interface card or a network interface chipset with associated network interface connection and network communication software.

Those skilled in the art will appreciate that many different types of computer systems (e.g. a Personal Computer, PC, a laptop, a server blade, for example in a data farm, or any other computer system capable of executing computer-readable instructions) exist, and the above-mentioned input/output means may take other forms, know today or later developed.

While the invention has been described with respect to preferred embodiments, those skilled in the art will readily appreciate that various changes and/or modifications can be made to the invention without departing from the spirit or scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

## Claims

1. A method for managing a data input/output operation of a virtual node of a virtualized environment running on a host computer comprising a processor operatively coupled with a local memory, for memory write of data in a distant memory comprised in a data storage network node operatively coupled to the host computer through a communication network, the method comprising:
• receiving a request of the virtual node for memory write of the data, the request comprising information related to at least one location of the data in the local memory;
• generating a first packet descriptor of a packet carrying a message according to a communication protocol between the host computer and the data storage network node, based on the request for memory write of the data, the first packet descriptor comprising a header of the message;
• generating at least one second packet descriptor of the packet based on the information related to the at least one location in the local memory of the data; and
• providing the first and second packet descriptors to a network interface of the host computer for transmission of the message to the data storage network node.

2. A method according to claim 1, wherein the generating at least one second packet descriptor comprises generating a plurality of second packet descriptors, based on information related to respective locations of the data in the local memory.

3. A method according to claim 1 or 2, wherein the virtualized environment comprises a guest environment and a host environment operatively coupled through a virtual interface, and wherein the request for memory write of the data is received by the host environment from the guest environment.

4. A method according to any of the preceding claims, wherein the generating the at least one second packet descriptor is based on first address information of the data in the local memory comprised in the request.

5. A method according to claim 4, wherein the generating the at least one second packet descriptor comprises translating address information comprised in the request into second address information of the data in local memory.

6. A method according to any of the preceding claims, wherein the at least one second packet descriptor comprises a pointer to the data stored in the local memory.

7. A method according to any of the preceding claims, wherein the first packet descriptor comprises identification information of the distant memory, and information indicating that the data input/output operation is for memory write.

8. A method according to any of the preceding claims, wherein the first packet descriptor further comprises a network layer protocol header, a transport layer protocol header, and a physical layer protocol header.

9. A method according to claim 8, wherein the first packet descriptor further comprises an Internet Protocol, IP, header, as a network layer protocol header, and a Transport Control Protocol, TCP, or a Uniform Datagram Protocol, UDP, header, as a transport layer protocol header.

10. A system for managing a data input/output operation of a virtual node comprising:
a computer comprising a processor operatively coupled with a local memory and a network interface, configured to run a virtualized environment comprising the virtual node, and to run in the virtualized environment a software task configured to:
• receive a request of the virtual node for memory write of data stored in the local memory in a distant memory of a data storage network node operatively coupled with the computer through the network interface, the request comprising information related to at least one location of the data in the local memory;
• generate a first packet descriptor of a packet carrying a message according to a communication protocol between the host computer and the data storage network node, based on the request for memory write of the data, the first packet descriptor comprising a header of the message;
• generate at least one second packet descriptor of the packet based on the information related to the at least one location in the local memory of the data; and
• provide the first and second packet descriptors to the network interface for transmission of the message to the data storage network node.

11. A computer program product comprising computer program code tangibly embodied in a computer readable medium, said computer program code comprising instructions to, when provided to a computer system and executed, cause said computer to perform a method for managing a data input/output operation of a virtual node according to any of claims 1 to 9.

12. A set of data representing, through compression or encoding, a computer program according to claim 11.

13. A non-transitory computer-readable storage medium storing a computer program that, when executed, causes a system comprising a processor operatively coupled with a memory, to perform a method for method for managing a data input/output operation of a virtual node of a virtualized environment running on a host computer comprising a processor operatively coupled with a local memory, for memory write of data in a distant memory comprised in a data storage network node operatively coupled to the host computer through a communication network, the method comprising: receiving a request of the virtual node for memory write of the data, the request comprising information related to at least one location in the local memory of the data; generating a first packet descriptor of a packet carrying a message according to a communication protocol between the host computer and the data storage network node, based on the request for memory write of the data, the first packet descriptor comprising a header of the message; generating at least one second packet descriptor of the packet based on the information related to the at least one location in the local memory of the data; and providing the first and second packet descriptors to a network interface of the host computer for transmission of the message to the data storage network node.
